# EUROPEAN PATENT SPECIFICATION

(11) **EP 0 494 286 B1**
(45) Date of publication and mention of the grant of the patent: **29.12.1993**
(21) Application number: 91913647.3
(22) Date of filing: 23.07.1991
(51) Int. Cl.: B60G 9/00

(54) **VEHICLE**
FAHRZEUG
VEHICULE

(30) Priority: 28.07.1990 GB 9016638
(43) Date of publication of application: 15.07.1992
(73) Proprietor: JCB LANDPOWER LIMITED, Cheadle, Staffordshire ST10 4WT (GB)
(72) Inventor: BROWN, David, John 7 Woodleighton Grove, Staffordshire ST14 8BX (GB); CLAY, Raymond 11 The Mount, Congleton Cheshire CW12 4HN (GB)
(74) Representative: Lucking, David John
(86) International application number: GB9101229
(87) International publication number: WO9202381

(56) References cited:
- WO-A-82/01518
- DE-A- 3 740 406
- GB-A- 420 786
- GB-A- 2 035 233

## Description

This invention relates to a vehicle and more particularly, but not exclusively, to a vehicle for agricultural use of the type commonly known as a tractor.

A conventional tractor, corresponding to the preamble of claim 1, employs a hitch assembly by means of which various agricultural implements such as a plough can be towed.

The tractor conventionally comprises front and rear axles which are rigid relative to a chassis of the tractor.

The propulsive force and therefore the tractive force (pull) developed by the tractor, therefore depends not only on the force that the engine of the tractor transmits to the rear driven wheels, but also on the load on those wheels. If the axle load is too small the wheels will slip and fail to grip the ground. Hence to increase the load and press the ground wheels into the ground, ballast weights are often provided at the rear. and to halance the tractor, ballast weights are sometimes carried at the front.

It will be appreciated that it would be preferred to use a lighter vehicle for such agricultural purposes to reduce compaction of the ground as the vehicle travels over it but hithertofore a satisfactory lighter vehicle has not been achieved.

Another problem with conventional tractors is that they are not ideally suited to travelling on normal roads. This is mainly because of the unsprung nature of the tractor construction.

Accordingly it is an object of the present invention to provide a new or improved vehicle particularly, but not exclusively, for use as an agricultural tractor.

Thus object is solved by the features of claim 1.

The front axle suspension means may be suspended from the chassis by a non-reactive suspension.

Thus the present invention provides a vehicle which by virtue of at least the rear axle means being suspended from the chassis provides an improved ride for an operator of the vehicle and components of the vehicle compared with a conventional tractor.

Because the towing means is secured to the rear axle means and because of the non-reactive nature of the rear axle suspension means it has been found, surprisingly, that contrary to learned opinion, a vehicle with rear axle suspension means is able to perform well for towing an implement and in particular, the vehicle is well able to tow a plough.

It will be appreciated that throughout this specification the term "chassis" is intended to mean both a frame type chassis to which body panels are attached and which carries a vehicle engine and other vehicle components thereon, and a chassis which is of the body shell type in which the vehicle engine and other components are carried.

The implement the vehicle is adapted to tow, may be a plough, harrow, or any other agricultural implement, or a trailer with wheels, for examples.

By the suspension means being "non-reactive", we mean that the vertical load on the respective ground wheels carried by the axle, and hence the traction between the ground wheels and the ground, does not significantly fluctuate in response to changes in the driving torque applied to the ground wheels.

For example, in one form of non-reactive suspension, the front and/or rear axle suspension means may comprise a pair of links at either side of the vehicle one link of each pair being above the other relative to the ground, the links of each pair being connected at their one ends to the chassis and at their other ends to the or the respective axle means whereby there is no significant change in the vertical loading on the drive wheels in response to changes in the driving torque applied to the ground wheels. Using such a non-reactive suspension, the traction between the ground wheels and the ground, remains high as the vehicle traverses irregularities of the ground, because vertical movement of the axle, in response to irregularities in the ground. is not transmitted to the chassis.

In another type of non-reactive suspension, a pair of links are provided to one side of the vehicle, between the axle and the chassis, a single link at the other side of the vehicle, and a Panhard rod extends transversely to the three links between the axle and the chassis.

According to another aspect of the present invention we provide a method of plouging utilising a vehicle in accordance with the aforementioned aspect of the invention comprising the steps of towing a plough with the vehicle, the plough being coupled to the towing means of the vehicle.

The invention will now be described with reference to the accompanying drawings in which:

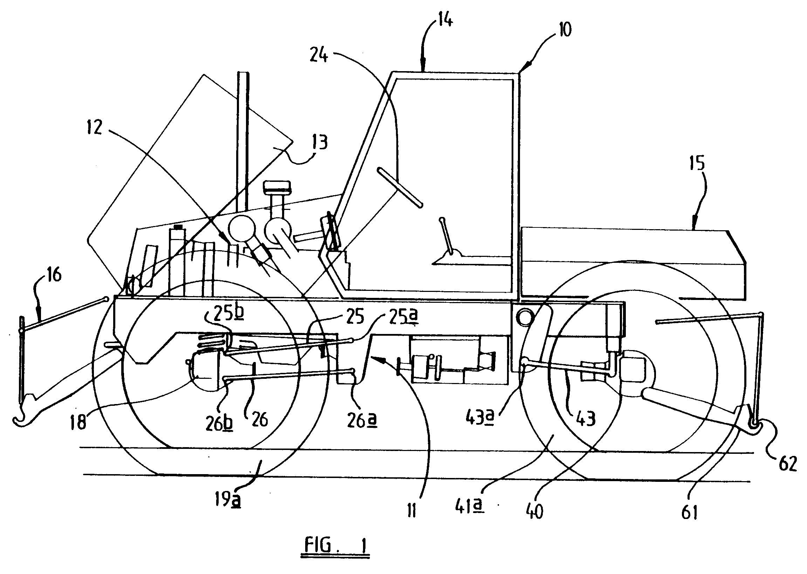

FIGURE 1 is a side illustrative view of a vehicle in accordance with the invention,

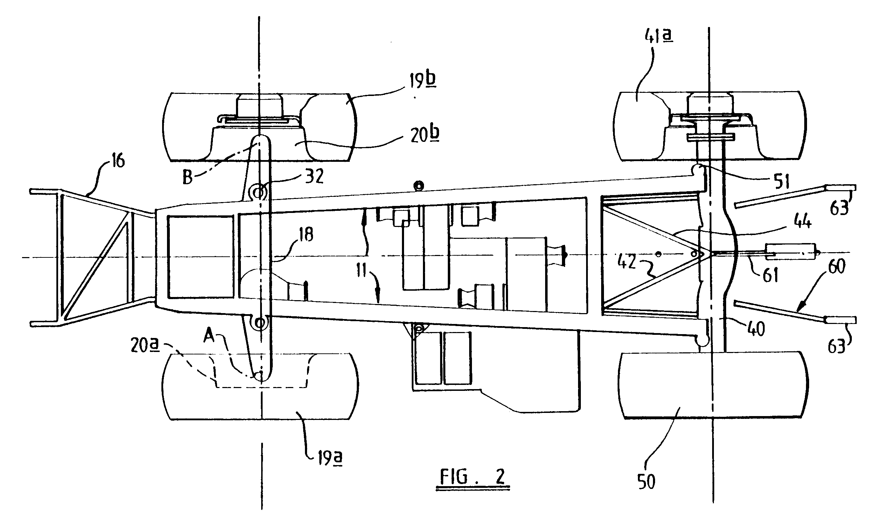

FIGURE 2 is a plan view of the vehicle of Figure 1. again show diagrammatically,
FIGURE 3 is an illustrative perspective view of part of the front end of the vehicle of Figures 1 and 2 with various components omitted for clarity,

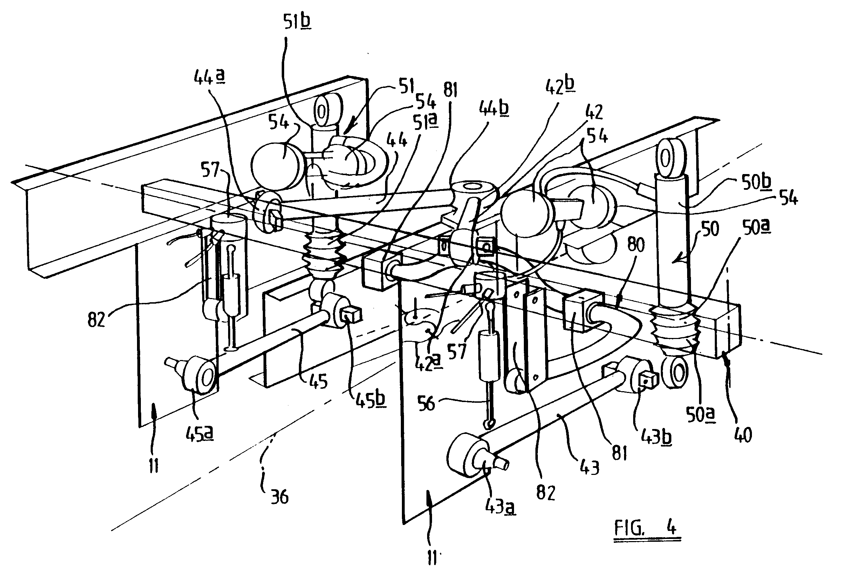

FIGURE 4 is an illustrative perspective view of part of the rear end of the vehicle of Figures 1 and 2 with various components omitted for clarity.
FIGURE 5 is an illustrative perspective view of a three part tractor linkage secured to a rear axle means of the vehicle of figures 1 to 4 with parts omitted for clarity.

Referring to the drawings, a vehicle 10 comprises a frame type of chassis 11 on which an engine 12 is mounted beneath a bonnet 13, a cab 14 for an operator or driver of the vehicle, and a load platform 15 on which in use, loads may be carried is provided.

Attached to a front of the chassis 11 is a towing assembly 16 which may be of the conventional three point hitch type or any other type of towing hitch assembly as may be desired.

The hitch assembly 16 is only intended for relatively light work for example in shunting trailers.

Suspended from the chassis 11 is a front axle 18 which carries a pair of ground engaging wheels 19a,19b, one at each end.

The wheels 19a,19b are mounted on respective hubs 20a,20b which are pivotable about pivot axes A,B, respectively in mountings 21a,21b at the respective ends of the front axle 18, in response to movement of a steering rods (not shown) which are connected to a steering box 23 and to the hubs 20a,20b. The hubs 20a,20b may otherwise be interconnected by a further rod (not shown) whereby the wheels 19a,19b are pivoted in generally parallel fashion by operation of a steering wheel 24 which is located in cab 14 and controls operation of the steering box 23.

Drive may be transmitted to the front wheels 19a,19b through the axle 18 as is well known in the art.

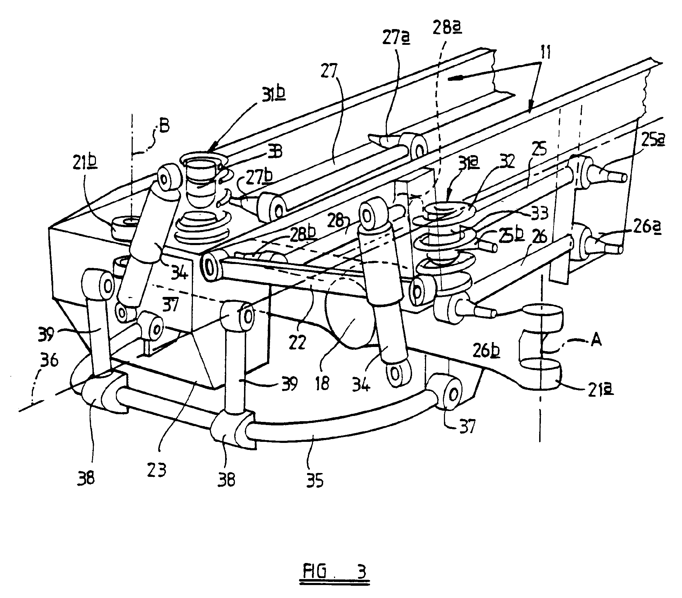

The front axle 18 is connected to the chassis 11 by means of two pairs of suspension links 25,26, and 27,28. Each of the suspension links 25 to 28 are secured to the chassis 11 at their one ends 25a-28a by rubber ball joints, and at their other ends 25b-28b by further rubber ball joints to extension parts of to the front axle 18, not seen in figure 3.

One link 25,27 of each pair of the links 25-28 is located above the other link 26,28, of the pair, and in this example, the two links 25,26, and 27,28, of each pair extend generally parallel to one another.

By virtue of the four suspension links 25 to 28, (and a Panhard rod 22 if found necessary) a non-reactive suspension is provided for the front axle 18 in which changes in vertical loading on the ground wheels 19a and 19b, and hence loss of traction between the wheels 19a,19b and the ground 30 is minimised both as the wheels 19a,19b and hence the front axle 18 move relative to the chassis 11 as the vehicle 10 is travelling over the ground 30, and in response to changes in drive torque transmitted to the ground wheels 19a,19b.

Coil springs 31a,31b interconnect the front axle 18 and the chassis 11, the coil springs 31a,31b each being of the type which comprise a main coil spring 32 which is relatively yielding at low loads and an auxiliary spring 33 which in this instance comprises a cushion of micro-cellular rubber which is equally stiff for all values of the load so that the coil springs 31a,31b become increasingly stiff with increasing load i.e. as the distance between the axle 18 and the chassis 11 at either respective side of the vehicle 10 decreases.

A pair of shock absorbers 34 of conventional construction are also provided between the chassis 11 and the axle 18 to damp the oscillation of the coil springs 31a,31b.

An anti-roll bar 35 is provided. connected to the chassis 11 and the axle means 18, to provide resistance to movement of either side of the vehicle at the front, about a roll axis 36, the roll bar 35 being received by first mountings 37 of the axle 18 and second mountings 38 connected rigidly via links 39 to the chassis 11.

Suspended from the chassis 11 at the rear of the vehicle is a rear axle 40 which carries a pair of ground engaging wheels 41a,41b via two pairs of suspension links 42,43, and 44,45, mounted at either side of the vehicle 10 with one link 42,44 of each pair above the other link 43,45, of each pair.

The one ends 42a-45a of the links 42-45 are connected by rubber ball joints to the chassis 11 and the other ends 43b,45b of links 43,45 are also connected via respective rubber ball joints to extensions to the rear axle 40. The other ends 42b,44b of links 42,44. are interconnected and coupled to a common point at an extension to axle 40 via a rubber ball joint to provide a V formation in plan view, with the apex of the V pointing towards the rear end of the vehicle 10.

A hydraulic actuator 50,51, is provided at either side of the vehicle and the actuators 50,51 interconnect the axle 40 to the chassis 11. The hydraulic actuators 50,51, comprises a piston (concealed by rubber bellows 50a,51a, connected to the axle 40, the pistons sliding in and out of cylinders 50b,51b such that as the distance between the chassis 11 and axle 40 decreases, hydraulic fluid is ejected from one or both of the actuators 50,51, depending on which of the ground engaging wheels 41a,41b has lifted due to irregularities in the ground 30.

However, the actuators 50,51, are each connected to a respective pair of gas springs 54 each of which contains a diaphragm so that fluid ejected from the cylinders 50b,51b, acts on one side of the diaphragm, the other sides of the diaphragms being subjected to pneumatic pressure by gas contained within the springs 54.

Thus as the wheels 41a,41b rise and fall due to e.g. irregularities in the ground, the gas springs 54 provide a cushioning effect.

However, the amount of fluid in the cylinders 50a,50b is increased and decreased depending on a height regulator means including a linkage 56 which is secured at each side of the vehicle between the link 43 or 45 and the chassis 11.

The linkages 56 each comprises a piston and cylinder arrangement, constructed so that as the link 43 for example moves as the load on the axle 40 increases, the respective linkage 56 operates on a valve 57 which allows more hydraulic fluid supplied from a pump (not shown) to be fed into the cylinders 50b,51b to extend the respective piston back to a datum position. Conversely, when the load on axle 40, decreases the link 43 will move so as to extend linkage 56 which operates valve 57 to allow hydraulic fluid to leave the respective cylinders 50b,51b so that the respective pistons are retracted back to a datum position. Hence the amount of hydraulic fluid in the respective cylinders 50b and 51b will change to extend or retract the pistons, so that the suspension will be self levelling.

Preferably a damper means is provided within the valve 57 so that the self levelling function of the suspension does not react to sudden movements of the linkages 43,45, as the vehicle is travelling, but only in response to changes in distance between the chassis 11 and the axle 40 caused as the result of, for example, the vehicle 10 cornering or more general changes in the ground surface.

The rear suspension arrangement includes an anti-roll bar 80 which is secured via mountings 81 to the rear axle, and through rigid links 82 to the chassis 11, the bar 80 providing resistance to the rear end of the vehicle rolling about axis 36.

Also attached to the rear axle 40 is a towing assembly 60 comprising a three point linkage having a pair of swinging arms 61 pivotally mounted on mountings M1 of the axle 40, which arms 61 are each provided with a hook 62 adapted to be engaged with an implement to be towed. The linkage 60 further comprises a top link 63 also intended to be coupled to an implement to be towed, the position of attachment of the top link 63 to the axle 40 being adjustable by means of a multi position mounting M2.

The towing hitch 60 further comprises a pair of control arms 65 which are pivotally mounted on a rock shaft and headstock casing assembly 66 which is fixed relative to the mounting M2. Links 68 extend between the control arms 65 and the outer ends of the swinging arms 61, and dampers 69 otherwise couple the control arms 65 to the swinging arms 61.

Thus the swinging arms 61 can move up and down relative to the axle 40, in a controlled, damped manner.

Lateral stabilisers 70 also connect the axle 40 to the swinging arms 6 to give rigidity or at least controlled float, in a lateral direction.

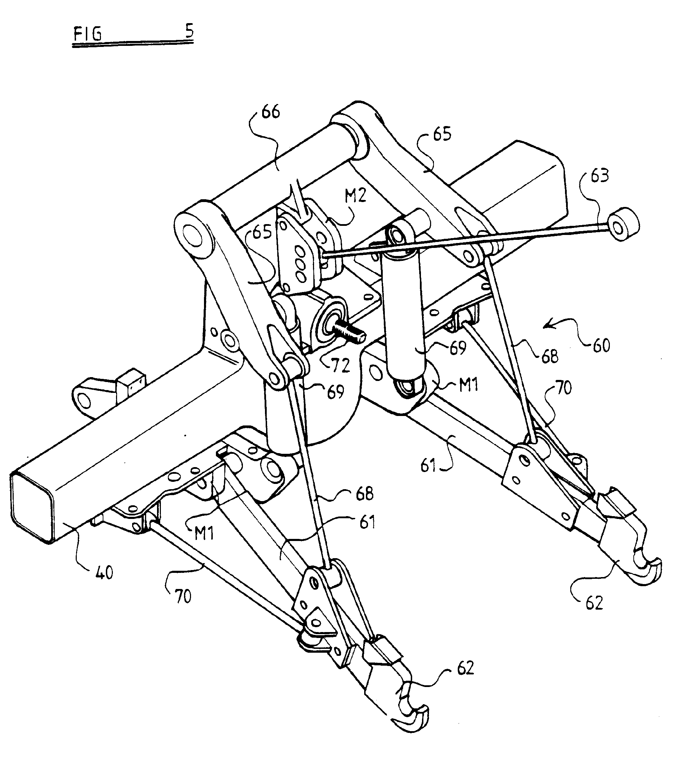

In the example shown in figure 5, the towing hitch 60 includes a power take off 72 to enable drive to the transmitted to the appropriate machinery being towed.

The rear axle 40 suspension is thus also of the non-reactive type by virtue of the four links 42 to 45 and is self levelling by virtue of the hydro-pneumatic springing system used.

It has been found that the vehicle 10 is well able to travel over a conventional road surface or rough ground, without the cab 14 and other components of the vehicle being subjected to severe shock and vibration as could occur in a conventional tractor.

By virtue of the towing assembly 60 being secured direct to the rear axle 40 of the vehicle, the vehicle 10 is also able to perform satisfactorily as a towing vehicle and can tow even a plough.

Also loads can be carried on the load platform 15 of the vehicle without effecting its performance due to the self levelling nature of the rear suspension.

Hence a relatively light vehicle compared to a conventional tractor can be used for a multitude of purposes including ploughing and load transit and hence the vehicle can be considered to be a replacement for a conventional tractor in many areas. To this effect, preferably the power take off 72 provided at the rear of the vehicle enables power to be coupled to implements to be used at the rear of the tractor, such as a plough, haymaking, or other agricultural or other implement to be towed.

Because of the relative lightness of the vehicle, it may be necessary to add ballast weights at the front of the vehicle to prevent the vehicle tipping about the axes of rotation of the rear wheels 41a,41b when the vehicle 10 is towing a heavy load such as a plough. However, even with such ballast weights fitted, the vehicle will still be considerably lighter than a conventional tractor wherein sufficient traction between the rear drive wheels and the ground is only achieved by increasing the weight of the tractor overall to an undesirable amount.

Various modifications may be made without departing from the scope of the invention as defined by the claims. For example, the chassis 11 shown in the drawings is of the frame type i.e. plurality of body parts 13,14, the engine 12 and other vehicle components are fitted onto the chassis 11, whereas the chassis 11 could be a body shell type chassis in which the various components of the vehicle are secured.

Instead of the four link type suspension at the front and rear of the vehicle, any other suitable non-reactive type suspension may be provided.

Particularly for a four wheel drive type of vehicle, it is preferred for the front and rear axle suspension means to be of the non reactive type. Where only the rear wheels are driven an entirely different front suspension for the front axle, may be provided as desired, even a reactive suspension.

A vehicle in accordance with the first aspect of the invention need not have the self levelling spring means at the rear of the vehicle as described, but any other non-reactive type of suspension for the rear axle 40 of the vehicle may be provided.

In the vehicle shown in the drawings, the ground wheels 19a,19b, 41a,41b, are all of approximately the same size. Bigger ground wheels may be provided at the rear of the vehicle if desired.

## Claims

1. A vehicle (10) comprising a chassis (11), a front axle means (18), a rear axle means (40) and a towing means (60) by which an implement may be towed, characterised in that the rear axle means (40) is suspended from the chassis by rear axle suspension means (42-45), the towing means (60) is secured to the rear axle means (40) and the rear axle suspension means (40) is non-reactive, thereby ensuring that the vertical load on the respective ground wheels carried by the rear axle means (40) does not significantly fluctuate in response to changes in the driving torque applied to the ground wheels.

2. A vehicle according to Claim 1 characterised in that the rear axle suspension means (42-45) comprises a pair of links (42,43; 44,45) at either side of the vehicle (10) one link (42,44) of each pair being above the other (43,45) relative to the ground, the links (42,43;44,45) of each pair being connected at their one ends (42a-45a) to the chassis (11) and at their other ends (42b-45b) to rear axle means (40) whereby there is no significant change in the vehicle loading on the drive wheels (41a,41b) in response to the changes in the driving torque applied to the drive wheels (41a, 41b).

3. A vehicle according to claim 2 characterised in that the links (42-45) of the rear axle suspension means (40) are trailing, the one ends (42a-45a) of the links (42-45) being in front of the other ends (42b-45b) of the links (42-45) in the forward direction of travel of the vehicle (10).

4. A vehicle according to claim 2 characterised in that the axis of rotation of the ground wheels (41a, 41b) carried by the rear axle means (40) is located generally midway between the other ends (42b-45b) of the links (42-45) of each pair.

5. A vehicle according to any one of claims 2 to 4 characterised in that to accommodate other components of the vehicle (10) the other ends (42a,44a) of the topmost links (42,44) of each pair of links of the rear axle suspension means (60) are connected to the rear axle means (40) at a common point such that the topmost links (42,44) lie in a V formation, the apex of the V pointing towards the rear of the vehicle.

6. A vehicle (10) according to any one of the preceding claims characterised in that the front axle means (18) is suspended from the chassis (11) by a front axle suspension means (25-28) which is non-reactive, the front axle suspension means (25-28) comprising a pair of links (25,26; 27,28) at either side of the vehicle, one link (25,27) of each pair being above the other (26,28) relative to the ground, the links (25,26; 27,28) of each pair being connected at their one ends (25a-28a) to the chassis (11) and at their other ends (25b-28b) to the front axle means (18).

7. A vehicle according to Claim 6 characterised in that the links (25-28) of the front axle suspension means are leading links, the one ends (25a-28a) being behind the front axle means (18) in the forward direction of travel of the vehicle.

8. A vehicle according to claim 1 characterised in that at least one of the front and/or rear axle suspension means comprises a pair of links to one side of the vehicle, between the axle and the chassis (11), a single link at the other side of the vehicle (10), and there being a Panhard rod (22) which extends transversely to the three links between the axle means (18,40) and the chassis (11).

9. A vehicle according to any one of claims 6 to 8 characterised in that the front axle means (18) is connected to the chassis (11) by damper means (31a,31b), comprising a main spring (32) which is relatively yielding at low loads, and an auxiliary spring (33) which is equally stiff for all values of the load so that the damper means (31a,31b) becomes increasingly stiff with increasing load.

10. A vehicle according to any one of the preceding claims, characterised in that the rear axle suspension means (42-45) is a non-reactive self levelling suspension means.

11. A vehicle according to claim 10 characterised in that the non-reactive self levelling suspension means is achieved with hydropneumatic spring means comprising, at each side of the vehicle, a piston (50a,51a) and cylinder (50b,51b), fluid from one side of the cylinder (50b,51b) being expelled from the cylinder (50b,51b) as the load on the piston (50a,51a) increases and acting on a pneumatic spring (54) the extent of the piston (50a,51a) from the cylinder (50b,51b) and hence the distance between the rear axle means (40) and the chassis (11) at the respective vehicle side being adjustable by means of a height regulator means (56,57) comprising a fluid pump means, and means to increase or decrease the amount of hydraulic fluid in the cylinder (50b,51b) to extend or retract the piston (50a,51a) depending on a level sensing means (56,57) which senses the distance between the rear axle means (40) and the chassis (11).

12. A method of ploughing utilising a vehicle in accordance with any one of the preceding claims comprising the steps of towing a plough with the vehicle (10), the plough being coupled to the towing means of the vehicle (10).

## Patentansprüche

1. Fahrzeug (10) mit einem Fahrgestell (11), einem Vorderachsenmittel (18), einem Hinterachsenmittel (40) und einem Schleppmittel (60), an welchem ein Gerät geschleppt werden kann, dadurch gekennzeichnet, daß das Hinterachsenmittel (40) durch ein Hinterachsenaufhängungsmittel (42-45) am Fahrgestell aufgehängt ist, das Schleppmittel (60) an dem Hinterachsenmittel (40) befestigt ist und das Hinterachsenaufhängungsmittel (40) nicht reaktiv ist, wodurch gewährleistet wird, daß die vertikale Last auf den jeweiligen Rädern des Hinterachsenmittels (40) als Folge von Veränderungen des Antriebsmoments, welches an den Rädern angreift, nicht bedeutend schwankt.

2. Fahrzeug nach Anspruch 1, dadurch gekennzeichnet, daß das Hinterachsenaufhängungsmittel (42-45) auf jeder Seite des Fahrzeugs (10) ein Lenkerpaar (42, 43; 44, 45) enthält, wobei sich ein Lenker (42, 44) jedes Paares in Bezug auf den Boden über dem anderen (43, 45) befindet, wobei die Lenker eines jeden Paares (42, 43; 44, 45) jeweils an einem Ende (42a, 45a) mit dem Fahrgestell (11) und am anderen Ende (42b, 45b) mit dem Hinterachsenmittel (40) verbunden sind, wodurch keine bedeutende Veränderung der Fahrzeuglast auf den Antriebsrädern (41a, 41b) als Folge von Veränderungen des an den Antriebsrädern (41a, 41b) angreifenden Antriebsmoments auftritt.

3. Fahrzeug nach Anspruch 2, dadurch gekennzeichnet, daß die Lenker (42-45) des Hinterachsenaufhängungsmittels nachlaufend angebracht sind, wobei sich die einen Enden (42a-45a) der Lenker (42-45) vor den anderen Enden (42b-45b) der Lenker (42-45) in Bezug auf die Vorwärtsfahrtrichtung des Fahrzeugs befinden.

4. Fahrzeug nach Anspruch 2, dadurch gekennzeichnet, daß die Rotationsachse der Räder (41a, 41b) des Hinterachsenmittels (40) im allgemeinen in der Mitte zwischen den anderen Enden (42b-45b) der Lenker (42, 45) eines jeden Paares liegt.

5. Fahrzeug nach einem der Ansprüche 2 bis 4, dadurch gekennzeichnet, daß zur Unterbringung anderer Bestandteile des Fahrzeugs (10) die anderen Enden (42a, 44a) der obersten Lenker (42, 44) eines jeden Paares des Hinterachsenaufhängungsmittels (42-45) an einem gemeinsamen Punkt mit dem Hinterachsenmittel (40) verbunden sind, so daß die obersten Lenker (42, 44) V-förmig zueinander liegen, wobei die Spitze des V's zur Rückseite des Fahrzeugs zeigt.

6. Fahrzeug (10) nach einem der vorhergehenden Ansprüche, dadurch gekennzeichnet, daß das Vorderachsenmittel (18) am Fahrgestell (11) mit einem nicht reaktiven Vorderachsenaufhängungsmittel (25-28) aufgehängt ist, wobei das Vorderachsenaufhängungsmittel (25-28) auf jeder Seite des Fahrzeugs ein Lenkerpaar (25, 26; 27, 28) enthält, wobei sich ein Lenker (25-27) eines jeden Paares in bezug auf den Boden oberhalb des anderen (26, 28) befindet und die Lenker (25, 26; 27, 28) und eines jeden Paares an einem Ende (25a-28a) mit dem Fahrgestell (11) und am anderen Ende (25b-28b) mit dem Vorderachsenmittel (18) verbunden sind.

7. Fahrzeug nach Anspruch 6, dadurch gekennzeichnet, daß die Lenker (25-28) des Vorderachsenaufhängungsmittels Führungslenker sind, deren eine Enden (25a-28a) in Vorwärtsfahrtrichtung des Fahrzeugs hinter dem Vorderachsenmittel (18) liegen.

8. Fahrzeug nach Anspruch 1, dadurch gekennzeichnet, daß das Vorder- und/oder das Hinterachsenaufhängungsmittel ein Lenkerpaar auf einer Seite des Fahrzeugs zwischen der Achse und dem Fahrgestell (11) und einen einzelnen Lenker auf der anderen (22) quer zu den drei Lenkern zwischen den Achsenmitteln (18, 40) und dem Fahrgestell (11) erstreckt.

9. Fahrzeug nach einem der Ansprüche 6 bis 8, dadurch gekennzeichnet, daß das Vorderachsenmittel (18) mit dem Fahrgestell (11) durch ein Dämpfungsmittel (31a, 31b) verbunden ist, welches eine Hauptfeder (32) enthält, die bei geringen Lasten entsprechend nachgibt, und eine Hilfsfeder (33), welche gleichermaßen steif für alle Lastwerte ist, so daß das Dämpfungsmittel (31a, 31b) bei größer werdender Last immer steifer wird.

10. Fahrzeug nach einem der vorhergehenden Ansprüche, dadurch gekennzeichnet, daß das Hinterachsenaufhängungsmittel (42-45) ein nicht reaktives, selbstausgleichendes Aufhängungsmittel ist.

11. Fahrzeug nach Anspruch 10, dadurch gekennzeichnet, daß das nicht reaktive, selbstausgleichende Aufhängungsmittel durch ein hydropneumatisches Federsystem verwirklicht wird, welches auf jeder Seite des Fahrzeugs einen Kolben (50a, 51a) und einen Zylinder (50b, 51b) besitzt, wobei von einer Seite des Zylinders (50b, 51b) Hydraulikflüssigkeit herausgedrückt wird, wenn die Last am Kolben (50s, 51a) ansteigt und auf eine pneumatische Feder (54) wirkt, und wobei die Erstreckung des Kolbens (50a, 51a) aus dem Zylinder (50b, 51b) und somit der Abstand zwischen dem Hinterachsenmittel (40) und dem Fahrgestell (11) an der jeweiligen Fahrzeugseite durch ein Höhenregulierungsmittel (56, 57) verstellbar ist, welches eine Flüssigkeitspumpe sowie ein Mittel enthält, um die Menge der Hydraulikflüssigkeit im Zylinder (50b, 51b) zu erhöhen oder zu erniedrigen, um den Kolben (50a, 51a) in Abhängigkeit vom Niveau einer Erfassungseinrichtung (56, 57), die den Abstand zwischen dem Hinterachsensystem (40) und dem Fahrgestell (11) erfaßt, aus- oder einzufahren.

12. Verfahren zum Pflügen unter Verwendung eines Fahrzeugs nach einem der vorhergehenden Ansprüche, dadurch gekennzeichnet, daß ein Pflug mit dem Fahrzeug (10) geschleppt wird, wobei der Pflug an das Schleppmittel des Fahrzeugs (10) gekuppelt ist.

## Revendications

1. Véhicule (10) comprenant un châssis (11), un moyen (18) formant essieu avant, un moyen (40) formant essieu arrière, et un moyen de remorquage (60) par lequel un instrument peut être tiré, caractérisé en ce que le moyen (40) de suspension d'essieu arrière est suspendu au châssis par un moyen (42, 45) de suspension de l'essieu arrière, le moyen de remorquage (60) est fixé au moyen (40) formant essieu arrière et le moyen de suspension d'essieu arrière est non réactif, en faisant ainsi en sorte que la charge verticale exercée sur les roues respectives d'appui au sol qui sont portées par le moyen (40) formant essieu arrière ne varie pas notablement en réponse aux variations du couple d'entraînement appliqué aux roues d'appui au sol.

2. Véhicule selon la revendication 1 caractérisé en ce que le moyen (42-45) de suspension de l'essieu arrière comprend une paire de bras (42,43; 44,45) sur chaque côté du véhicule (10), un bras (42,44) de chaque paire étant situé au-dessus de l'autre (43,45) par rapport au sol, les bras 42,43 ; 44,45) de chaque paire étant reliés au châssis (11) à leurs premières extrémités (42a-45a) et au moyen (40) formant essieu arrière à leurs autres extrémités (42b-45b), de sorte qu'il ne se produit pas de variations notables dans la charge du véhicule sur les roues motrices (41a, 41b) en réponse aux variations du couple d'entraînement appliqué aux roues motrices (41a,41b).

3. Véhicule selon la revendication 2, caractérisé en ce que les bras (42-45) du moyen (40) de suspension de l'essieu arrière sont tirés, les premières extrémités (42a-45a) des bras (42-45) étant en avant des autres extrémités (42b-45b) des bras (42-45) dans le sens de la marche avant du véhicule (10).

4. Véhicule selon la revendication 2, caractérisé en ce que l'axe de rotation des roues (41a, 41b) d'appui au sol portées par le moyen (40) formant essieu arrière est placé sensiblement à mi- distance entre les autres extrémités (42b-45b) des bras (42-45) de chaque paire.

5. Véhicule selon une quelconque des revendications 2 à 4, caractérisé en ce que, pour recevoir d'autres organes du véhicule (10), les autres extrémités (42a,44a) des bras supérieurs (42,44) de chaque paire de bras du moyen (60) de suspension de l'essieu arrière sont reliées au moyen (40) formant essieu arrière en un point commun de telle sorte que les bras supérieurs (42,44) sont disposés en une formation en V, la pointe du V pointant vers l'arrière du véhicule.

6. Véhicule (10) selon une quelconque des revendications précédentes, caractérisé en ce que le moyen (18) formant essieu avant est suspendu au châssis (11) par un moyen (25-28) de suspension de l'essieu avant qui est non réactif, le moyen (25-28) de suspension de l'essieu avant comprenant une paire de bras (25,26; 27,28) de chaque côté du véhicule, un bras (25,27) de chaque paire étant situé au-dessus de l'autre (26,28) par rapport au sol, les bras (25,26; 27,28) de chaque paire étant reliés au châssis (11) à leurs premières extrémités (25a-28a) et au moyen (18) formant essieu avant à leurs autres extrémités (25b-28b).

7. Véhicule selon la revendication 6, caractérisé en ce que les bras (25-28) du moyen de suspension de l'essieu avant sont des bras poussants, les premières extrémités (25a, 28a) étant situées en arrière du moyen (18) formant essieu avant, dans le sens de la marche avant du véhicule.

8. Véhicule selon la revendication 1, caractérisé en ce qu'au moins un des moyens de suspension de l'essieu avant et/ou de l'essieu arrière comprend une paire de bras sur un côté du véhicule, entre l'essieu et le châssis (11), un seul bras de l'autre côté du véhicule (10), et il est prévu une barre Panhard (22) qui s'étend transversalement aux trois bras entre le moyen (18,40) formant essieu et le châssis (11).

9. Véhicule selon une quelconque des revendications 6 à 8, caractérisé en ce que le moyen (18) formant essieu avant est relié au châssis (11) par un moyen amortisseur (31a, 31b) comprenant un ressort principal (32) qui est relativement souple aux faibles charges, et un ressort auxiliaire (33) qui est de raideur constante à toutes les valeurs de la charge, de sorte que le moyen amortisseur (31a, 31b) devient de plus en plus raide avec l'accroissement de la charge.

10. Véhicule selon une quelconque des revendications précédentes, caractérisé en ce que le moyen (42-45) de suspension de l'essieu arrière est un moyen de suspension non réactif, à règlage d'assiette automatique.

11. Véhicule selon la revendication 10, caractérisé en ce que le moyen de suspension non réactif à règlage d'assiette automatique est réalisé avec un moyen formant ressort hydropneumatique comprenant, de chaque côté du véhicule, un piston (50a, 51a) et un cylindre (50b, 51b), le fluide situé d'un côté du cylindre (50b,51b) étant chassé du cylindre (50b,51b) lorsque la charge sur le piston (50a,51a) croit et agissant sur un ressort pneumatique (54), la mise en extension du piston (50a,51a) en dehors du cylindre (50b,51b), et par conséquent la distance entre le moyen (40) formant essieu arrière et le châssis (11) sur le côté respectif du véhicule, pouvant être ajustée à l'aide d'un moyen (56,57) formant régulateur de hauteur qui comprend un moyen formant pompe à fluide, et un moyen pour augmenter ou réduire la quantité de fluide hydraulique contenu dans le cylindre (50b,51b) pour mettre le piston (50a,51a) en extension ou le rétracter en fonction d'un moyen (56,57) formant capteur de niveau qui capte la distance entre le moyen (40) formant essieu arrière et le châssis (11).

12. Procédé de labourage utilisant un véhicule selon une quelconque des revendications précédentes, comprenant les phases consistant à tirer une charrue au moyen du véhicule (10), la charrue étant accouplée aux moyens de remorquage du véhicule (10).
